(19) **Europäisches Patentamt / European Patent Office / Office européen des brevets**

(11) **EP 3 660 693 A1**

(12) # EUROPEAN PATENT APPLICATION
published in accordance with Art. 153(4) EPC

(43) Date of publication:
**03.06.2020 Bulletin 2020/23**

(21) Application number: **18838259.2**

(22) Date of filing: **23.07.2018**

(51) Int Cl.:
***G06F 16/00*** (2019.01)

(86) International application number:
**PCT/CN2018/096652**

(87) International publication number:
**WO 2019/019969 (31.01.2019 Gazette 2019/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.07.2017 CN 201710606293**

(71) Applicant: **BOE Technology Group Co., Ltd.**
**Beijing 100015 (CN)**

(72) Inventors:
- **ZHANG, Zhenzhong**
  **Beijing 100176 (CN)**
- **CHEN, Xue**
  **Beijing 100176 (CN)**

(74) Representative: **Brötz, Helmut et al**
**Rieder & Partner mbB**
**Patentanwälte - Rechtsanwalt**
**Corneliusstrasse 45**
**42329 Wuppertal (DE)**

(54) **KNOWLEDGE VERIFICATION METHOD, KNOWLEDGE VERIFICATION DEVICE, AND STORAGE MEDIUM**

(57)     A knowledge verification method, a knowledge verification device, and a storage medium. The knowledge verification method comprises: acquiring target candidate knowledge and conflicting candidate knowledge that contradicts the target candidate knowledge (S11); acquiring a target evidence group of the target candidate knowledge and a conflicting evidence group of the conflicting candidate knowledge (S12); calculating the verification probability of the target candidate knowledge on the basis of a logic rule for each piece of evidence in the target evidence group, and calculating the verification probability of the conflicting candidate knowledge on the basis of a logic rule for each piece of evidence in the conflicting evidence group (S13); comparing the verification probability of the target candidate knowledge to the verification probability of the conflicting candidate knowledge and determining whether the target candidate knowledge is correct knowledge on the basis of the comparison result (S14).

S11 — acquiring target candidate knowledge and conflict candidate knowledge that contradicts the target candidate knowledge

S12 — acquiring a target evidence group related to the target candidate knowledge and a conflict evidence group related to the conflict candidate knowledge

S13 — calculating a verification probability of the target candidate knowledge based on logic rules of respective evidences in the target evidence group and calculating a verification probability of the conflict candidate knowledge based on logic rules of respective evidences in the conflict evidence group

S14 — comparing the verification probability of the target candidate knowledge with the verification probability of the conflict candidate knowledge and determining whether the target candidate knowledge is correct knowledge or not according to a comparison result

FIG. 1

**Description**

CROSS-REFERENCE TO RELATED APPLICATION

The present application claims priority to Chinese patent application No. 201710606293.1, filed July 24, 2017, the entire disclosure of which is incorporated herein by reference as part of the present application.

TECHNICAL FIELD

The embodiments of the present disclosure relate to a knowledge verification method, a knowledge verification device, and a storage medium.

BACKGROUND

In scientific research, Internet applications, electronic commerce and other fields, data scales, data types and the like are rapidly growing, and big data has gradually become a research hotspot. The big data refers to a collection of data that cannot be captured, managed, and processed by conventional software tools within a certain period of time. The big data has characteristics of a large data scale, numerous data types, a fast data processing speed, a low data-value density, and so on.

The big data comprises structured data, semi-structured data, and unstructured data. With the rapid development of social networks, Internet of things, cloud computing, and the like, the unstructured data grows exponentially due to the characteristics of the unstructured data such as huge data, numerous types, strong timeliness, and so on, and the unstructured data has gradually become mainstream data in an era of big data.

SUMMARY

As least one embodiment of the present disclosure provides a knowledge verification method, and the knowledge verification method comprises: acquiring target candidate knowledge and conflict candidate knowledge that contradicts the target candidate knowledge; acquiring a target evidence group related to the target candidate knowledge and a conflict evidence group related to the conflict candidate knowledge; calculating a verification probability of the target candidate knowledge based on logic rules of respective evidences in the target evidence group and calculating a verification probability of the conflict candidate knowledge based on logic rules of respective evidences in the conflict evidence group; and comparing the verification probability of the target candidate knowledge with the verification probability of the conflict candidate knowledge and determining whether the target candidate knowledge is correct knowledge or not according to a comparison result.

At least one embodiment of the present disclosure further provides a knowledge verification device, and the knowledge verification device comprises a processor and a memory , the memory is configured for storing non-transitory computer instructions; and the non-transitory computer instructions, as executed by the processor, causing the processor to perform steps including: acquiring target candidate knowledge and conflict candidate knowledge that contradicts the target candidate knowledge; acquiring a target evidence group related to the target candidate knowledge and a conflict evidence group related to the conflict candidate knowledge; calculating a verification probability of the target candidate knowledge based on logic rules of respective evidences in the target evidence group and calculating a verification probability of the conflict candidate knowledge based on logic rules of respective evidences in the conflict evidence group; and comparing the verification probability of the target candidate knowledge with the verification probability of the conflict candidate knowledge, and determining whether the target candidate knowledge is correct knowledge or not according to a comparison result.

At least one embodiment of the present disclosure further provides a storage medium, used for storing non-transitory computer instructions, the non-transitory computer instructions, as executed by a processor, cause the processor to perform steps including: acquiring target candidate knowledge and conflict candidate knowledge that contradicts the target candidate knowledge; acquiring a target evidence group related to the target candidate knowledge and a conflict evidence group related to the conflict candidate knowledge; calculating a verification probability of the target candidate knowledge based on logic rules of respective evidences in the target evidence group and calculating a verification probability of the conflict candidate knowledge based on logic rules of respective evidences in the conflict evidence group; and comparing the verification probability of the target candidate knowledge with the verification probability of the conflict candidate knowledge, and determining whether the target candidate knowledge is correct knowledge or not according to a comparison result.

BRIEF DESCRIPTION OF THE DRAWINGS

In order to clearly illustrate the technical solutions of the embodiments of the disclosure, the drawings of the embodiments will be briefly described in the following; it is obvious that the described drawings are only related to some embodiments of the disclosure and thus are not limitative to the disclosure.

FIG. 1 is a schematic flowchart of a knowledge verification method provided by at least one embodiment of the present disclosure;

FIG. 2A is a schematic block diagram of a target evidence group/a conflict evidence group provided by at least one embodiment of the present disclosure;

FIG. 2B is a schematic block diagram of logic rules of a target evidence group/a conflict evidence group provided by at least one embodiment of the present disclosure;

FIG. 3 is a schematic flowchart of another knowledge verification method provided by at least one embodiment of the present disclosure;

FIG. 4A is a schematic block diagram of an example of a target evidence group provided by at least one embodiment of the present disclosure;

FIG. 4B is a schematic block diagram of an example of a conflict evidence group provided by at least one embodiment of the present disclosure;

FIG. 5 is a schematic flowchart of yet another knowledge verification method provided by at least one embodiment of the present disclosure;

FIG. 6 is a schematic flowchart of still yet another knowledge verification method provided by at least one embodiment of the present disclosure; and

FIG. 7 is a schematic block diagram of a knowledge verification device provided by at least one embodiment of the present disclosure.

DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects. The phrases "connect", "connected", etc., are not intended to define a physical connection or mechanical connection, but may include an electrical connection, directly or indirectly. "On," "under," "right," "left" and the like are only used to indicate relative position relationship, and when the position of the object which is described is changed, the relative position relationship may be changed accordingly. In order to make the following description of the embodiments of the present disclosure clear and concise, the present disclosure omits a detailed description of known functions and known components.

With rapid development of cloud computing, people pay more and more attention to big data. The big data era has brought in two effects: on one hand, the increase of data can satisfy people's different needs of information; on the other hand, useful information and knowledge are hidden in a large amount of irrelevant data. Automatic extraction of knowledge in a designated domain from massive amounts of unstructured data can help people quickly master knowledge and to deepen their understanding of knowledge. However, among various kinds of knowledge that are automatically extracted from the massive data, there may be pieces of knowledge in conflict and contradiction with each other. At present, a problem of knowledge conflict is usually solved in such a way that whether the various kinds of knowledge extracted are right or wrong is judged by domain experts. This kind of judging method based on domain experts needs to consume a lot of time and manpower, and is not suitable for the judgment of massive knowledge in the era of big data.

At least one embodiment of the present disclosure provides a knowledge verification method, a knowledge verification device and a storage medium. According to the knowledge verification method, logic rules of respective evidences for candidate knowledge can be modeled, and a verification probability of the candidate knowledge is calculated according to the logic rules of respective evidences, so as to automatically verify correctness of the candidate knowledge, solve a problem of knowledge conflict, and save manpower and time costs. For example, the knowledge verification method and the knowledge verification device provided by embodiments of the present disclosure can automatically analyze, process, and acquire useful knowledge from massive, unstructured big data, and verify the correctness of the acquired knowledge.

A knowledge verification method, a knowledge verification device, and a storage medium provided by embodiments of the present disclosure will be described in detail below with reference to the accompanying drawings.

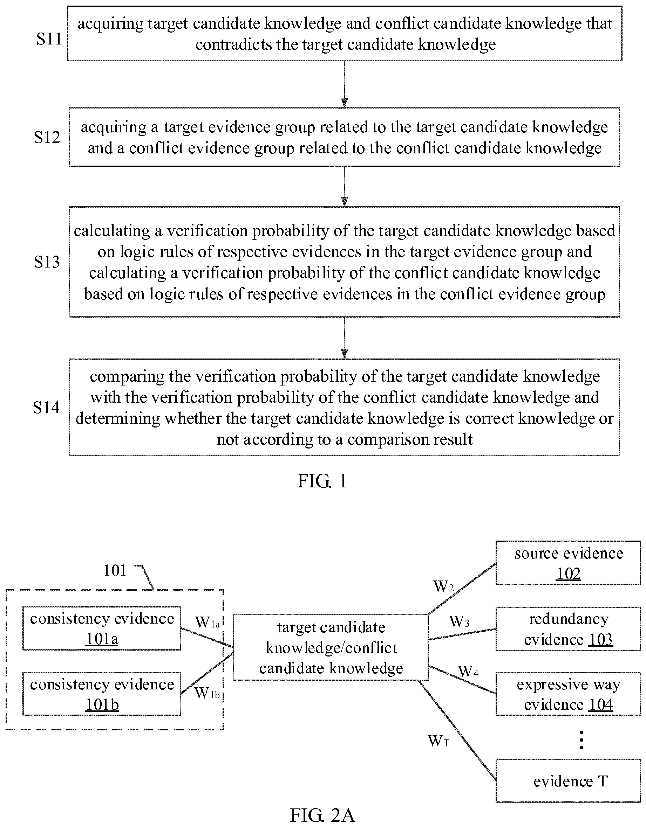

FIG. 1 shows a schematic flowchart of a knowledge verification method provided by at least one embodiment of the present disclosure.

For example, as shown in FIG. 1, the knowledge verification method provided by an embodiment of the present disclosure may include the following steps:

S11: acquiring target candidate knowledge and conflict candidate knowledge that contradicts the target candidate knowledge;

S12: acquiring a target evidence group related to the target candidate knowledge and a conflict evidence group related to the conflict candidate knowledge;

S13: calculating a verification probability of the target candidate knowledge based on logic rules of respective evidences in the target evidence group and calculating a verification probability of the conflict candidate knowledge based on logic rules of respective evidences in the conflict evidence group; and

S14: comparing the verification probability of the target candidate knowledge with the verification probability of the conflict candidate knowledge, and determining whether the target candidate knowledge is correct knowledge or not according to a comparison result.

For example, a basic idea of a Markov logic network is that: when an event violates a logic rule in a series of logic rules, a probability of existence of this event is decreased, but the existence of this event is not impossible. The less logic rules an event violates, the greater the probability that this event exist is. Therefore, each logic rule has a specific weight, and the specific weight reflects a binding force on possible events that satisfy the logic rule. If the weight of a logic rule is greater, a difference between an event that satisfies the logic rule and another event that does not satisfy the logic rule is larger. Compatibility between the target candidate knowledge (or the conflict candidate knowledge) and existing correct knowledge and a data source depends on the number of logic rules violated by the target candidate knowledge (or the conflict candidate knowledge) and the importance of the logic rules.

The knowledge verification method provided by an embodiment of the present disclosure can model a logic rule between extracted candidate knowledge and an extracted evidence group (for example, a logic rule between the target candidate knowledge and the target evidence group, and a logic rule between the conflict candidate knowledge and the conflict evidence group) through Markov logic network, calculate a verification probability of the extracted target candidate knowledge and a verification probability of the extracted conflict candidate knowledge based on the logic rules of respective evidences in the evidence group, and determine whether the extracted target candidate knowledge is correct knowledge or not according to a comparison result between the verification probability of the target candidate knowledge and the verification probability of the conflict candidate knowledge. For example, in step S11, both the target candidate knowledge and the conflict candidate knowledge are extracted from a data source. The data source may be composed of unstructured data.

For example, the data source may be a separate collection of different types of knowledge, such as a medical knowledge collection, a literary knowledge collection, a historical knowledge collection, a physical knowledge collection, or the like. For another example, the data source may also be a mixed collection of different types of knowledge (such as, physics, history, mathematics, etc.).

For example, various kinds of unstructured data in the data source can be various kinds of knowledge extracted from different sources. Sources of various kinds of knowledge may be textbooks, websites, papers, literary works, and so on. For example, in a case where the data source is the medical knowledge collection, sources of the medical knowledge may be medical websites, medical papers, medical textbooks, medical records, and so on.

For example, in the descriptions of the present disclosure, a knowledge verification method provided by an embodiment of the present disclosure will be described in detail by taking a case where the data source is a collection of medical knowledge as an example. However, those skilled in the field shall know that the data source may also be a data source of other types.

For example, a plurality pieces of candidate knowledge may be extracted from the data source to constitute a candidate knowledge group; for another example, a candidate knowledge group may also be composed of all candidate knowledge in the data source. Both the target candidate knowledge and the conflict candidate knowledge may be selected from the candidate knowledge group.

For example, the plurality pieces of candidate knowledge in the candidate knowledge group may comprise "Vitamin C can prevent colds", "Calcium helps prevent osteoporosis", "Vitamin C cannot prevent colds", "dried small shrimps can prevent osteoporosis", "lemon can prevent colds", and the like. For example, the candidate knowledge group may comprise many pieces of knowledge that contradict with each other, for example, "Vitamin C can prevent colds" and "Vitamin C cannot prevent colds" in the above candidate knowledge group are pieces of knowledge in contradiction with each other. If "Vitamin C can prevent colds" is selected as the target candidate knowledge, "Vitamin C cannot prevent colds" is the conflict candidate knowledge.

For example, a natural language processing (NLP) technology can be used to extract the target candidate knowledge and the conflict candidate knowledge from the data source.

For example, the natural language processing technology may comprise syntactic parsing, word segmentation, lexical analysis, semantic analysis, word recognition, and other language processing technologies. For example, the natural language processing technology can perform language processing by using a deep learning neural network or other methods. The accuracy of the selected target candidate knowledge and/or the selected conflict candidate knowledge can be improved by using the deep learning neural network to process unstructured data in the data source.

For example, the deep learning neural network may comprise a neural network such as a recurrent neural network (RNN), a recursive neural network (RNN), and so on. The recurrent neural network can be used for word representation, statement legitimacy check, vocabulary-property tagging, and other natural language processing. The recurrent neural network may comprise a long short-term memory (LSTM) neural network. The long short-term memory neural network has the ability to learn long-term dependent relationship, and the long short-term memory neural network can use a relative wide range of contextual information in text processing to determine a probability of a next word. The deep learning neural network, for example, may adopt one or several of the above neural networks to process and analyze the natural language.

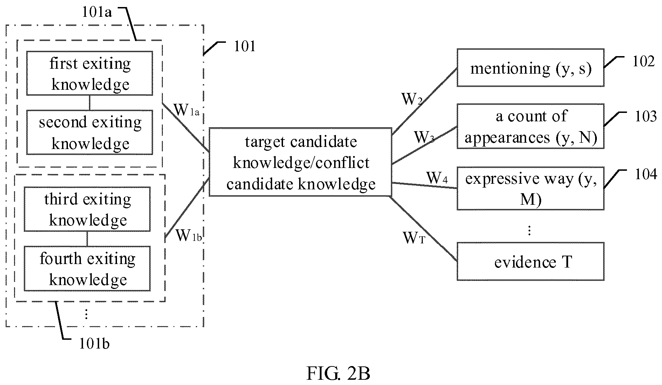

FIG. 2A shows a schematic block diagram of a target evidence group/a conflict evidence group provided by at least one embodiment of the present disclosure ; and FIG. 2B shows a schematic block diagram of logic rules of a target evidence group/a conflict evidence group provided by at least one embodiment of the present disclosure.

For example, in step S12, the target evidence group may be used to determine a possibility that the target candidate knowledge is correct, and the conflict evidence group may be used to determine a possibility that the conflict candidate knowledge is correct. However, the present disclosure is not limited thereto, the target evidence group may also be used to determine a possibility that the target candidate knowledge is wrong, and the conflict evidence group may be used to determine a possibility that the conflict candidate knowledge is wrong.

The knowledge verification method provided by an embodiment of the present disclosure can model logic rules of respective evidences of the candidate knowledge, and calculate a verification probability of the candidate knowledge according to the logic rules of respective evidences, so as to automatically analyze, process, obtain useful knowledge from massive and unstructured big data, verify the correctness of the obtained knowledge, solve the knowledge conflict problem, and save manpower and time costs.

For example, as shown in FIG. 2A, each evidence group may comprise at least one of a group consisting of a source evidence 102, a redundancy evidence 103 and an expressive way evidence 104 (for example, the target evidence group may comprise at least one of a group consisting of the source evidence 102, the redundancy evidence 103, and the expressive way evidence 104; meanwhile, the conflict evidence group may comprise at least one of the group consisting of the source evidence 102, the redundancy evidence 103, and the expressive way evidence 104). For example, for the source evidence 102, the source evidence 102 in the target evidence group represents a source of the target candidate knowledge, and the source evidence 102 in the conflict evidence group represents a source of the conflict candidate knowledge. For example, the source evidence 102, the redundancy evidence 103, and the expressive way evidence 104 all may be obtained from a data source.

It should be noted that, the target evidence group and the conflict evidence group may also respectively comprise a plurality of evidences (such as, an evidence T shown in FIG. 2A) obtained from the data source. The embodiments of the present disclosure do not limit specific types of evidences in the target evidence group and in the conflict evidence group. Evidence types of the target evidence group and evidence types of the conflict evidence group may be the same.

For example, the source evidence 102 may comprise a plurality of evidences which are from different sources. The source evidence 102, for example, may comprise a first source evidence and a second source evidence, and the first source evidence and the second source evidence are from a medical textbook and a medical paper, respectively.

For example, as shown in FIG. 2A, both the target evidence group and the conflict evidence group may also comprise a consistency evidence 101. For example, the consistency evidence 101 may be obtained from an existing knowledge base. The existing knowledge base, for example, may represent a collection of all or a part of the existing correct knowledge.

For example, the existing knowledge base and the data source may be selected according to the target candidate knowledge and the conflict candidate knowledge. For example, in a case where the target candidate knowledge is medical knowledge, the data source may be a collection of medical knowledge, and the existing knowledge base may be a collection of existing correct medical knowledge.

For example, evidences in the target evidence group and evidences in the conflict evidence group correspond to each other and have the same quantity.

For example, respective evidences in the target evidence group and respective evidences in the conflict evidence group may also be obtained from the data source and/or the existing knowledge base by using the natural language processing technology such as the deep learning neural network.

For example, as shown in FIG. 2B, a logic rule of the source evidence 102 may be expressed as: mention (y, s); a logic rule of the redundancy evidence 103 may be expressed as: a count of appearances (y, N); a logic rule of the expressive way evidence 104 may be expressed as: expressive way (y, M); and a logic rule of the consistency evidence 101 may be expressed as: first existing knowledge $\Lambda$ second existing knowledge => y.

For example, in a case where y denotes the target candidate knowledge, S represents a source of the target candidate knowledge, N represents a count of appearances of the target candidate knowledge, M represents a quantity of different expressive ways of the target candidate knowledge; in a case where y denotes the conflict candidate knowledge, S represents a source of the conflict candidate knowledge, N represents a count of appearances of the conflict candidate knowledge, M represents a quantity of different expressive ways of the conflict candidate knowledge.

For example, a basic idea of the source evidence 102 is that: the authority of an information source (namely, the source of knowledge) is higher, the likelihood that correct knowledge appears is larger.

For example, in a case where y represents the target candidate knowledge, a weight $W_2$ of the source evidence 102 may be represented as an authority level of S, and the authority level of S is higher, the probability that the target candidate knowledge is correct is larger. Weights $W_2$ of source evidences 102 from different sources may be different or the same. A weight $W_2$ of a source evidence 102 may be preset. For example, in a case where S is a medical textbook, the weight $W_2$ of S may be 10; in a case where S is a medical paper, the weight $W_2$ of S also may be 10; in a case where S is a medical record, the weight $W_2$ of S may be 9; and in a case where S is a medical website, the weight $W_2$ of S may be 5.

For example, assume that the target candidate knowledge (such as, "Vitamin C can prevent colds") is obtained from a medical website, but the conflict candidate knowledge (such as, "Vitamin C cannot prevent colds") is obtained from a medical textbook. Therefore, the weight $W_2$ of the source evidence 102 of the target candidate knowledge is 5, and the weight $W_2$ of the source evidence 102 of the conflict candidate knowledge is 10, so that a probability that the target candidate knowledge (such as, "Vitamin C can prevent colds") is correct is less than a probability that the conflict candidate knowledge (such as, "Vitamin C cannot prevent colds") is correct.

For example, a basic idea of the redundancy evidence 103 is that: relative to wrong knowledge, correct knowledge may appear in more information sources.

For example, a weight $W_3$ of the redundancy evidence 103 may be represented as $\log_a N$.

For example, if the target candidate knowledge (such as, "Vitamin C can prevent colds") appears in 8 medical textbooks, but the conflict candidate knowledge (such as, "Vitamin C cannot prevent colds") appears in 16 medical textbooks. Therefore, if a is equal to 2, the weight $W_3$ of the redundancy evidence 103 of the target candidate knowledge is $\log_2 8=3$, and the weight $W_3$ of the redundancy evidence 103 of the conflict candidate knowledge is $\log_2 16=4$, so that a probability that the target candidate knowledge (such as, "Vitamin C can prevent colds") is correct is less than a probability that the conflict candidate knowledge (such as, "Vitamin C cannot prevent colds") is correct.

For example, a basic idea of the expressive way evidence 104 is that: relative to the wrong knowledge, the correct knowledge may be expressed in more different ways.

For example, a weight $W_4$ of the expressive way evidence 104 may be expressed as $\log_a M$.

For example, for the target candidate knowledge (such as, "Vitamin C can prevent colds"), four different expressive ways, such as "Vitamin C can effectively prevent a cold", "Eating Vitamin C can prevent a cold" and the like, may exist in the whole data source; however, for the conflict candidate knowledge (such as, "Vitamin C cannot prevent colds"), eight different expressive ways, such as "Vitamin C has little effect on prevention and treatment of a cold", "Taking Vitamin C has no effect on prevention and treatment of a cold" and the like, may exist in the whole data source. Therefore, if a is equal to 2, the weight $W_4$ of the expressive way evidence 104 of the target candidate knowledge is $\log_2 4=2$, and the weight $W_4$ of the expressive way evidence 104 of the conflict candidate knowledge is $\log_2 8=3$, so that a probability that the target candidate knowledge (such as, "Vitamin C can prevent colds") is correct is less than a probability that the conflict candidate knowledge (such as, "Vitamin C cannot prevent colds") is correct.

It should be noted that, in the above descriptions, $\log_a$ represents a logarithmic function with "a" as a base number. The weight $W_3$ of the redundancy evidence 103 and the weight $W_4$ of the expressive way evidence 104 are not limited to the above function expressions, and the weight $W_3$ of the redundancy evidence 103 and the weight $W_4$ of the expressive way evidence 104 may have other function expressions. For example, the weight $W_3$ of the redundancy evidence 103 may be expressed as $\sqrt{N}$, and the weight $W_4$ of the expressive way evidence 104 may be expressed as $\sqrt{M}$.

For example, a basic idea of the consistency evidence 101 is that: relative to the wrong knowledge, the correct knowledge should be compatible with the existing correct knowledge, that is, the correct knowledge should not conflict with the existing correct knowledge. The logic rule of the consistency evidence 101 is expressed as "first existing knowledge $\Lambda$ second existing knowledge => y", which may represent that candidate knowledge y (for example, y may be the target candidate knowledge or the conflict candidate knowledge) can be derived based on the first existing knowledge and the second existing knowledge. That is, the candidate knowledge y does not conflict with both the first existing knowledge and the second existing knowledge.

For example, in the logic rule of the consistency evidence 101, the first existing knowledge and the second existing knowledge both are knowledge in the existing knowledge base, that is, the first existing knowledge and the second existing knowledge both are existing correct knowledge. The logic rule of the consistency evidence 101 is a constraint rule between the existing correct knowledge and the target candidate knowledge. For example, assume that the target candidate knowledge is "dried small shrimps can prevent osteoporosis", the conflict candidate knowledge is "dried small shrimps cannot prevent osteoporosis", the existing knowledge base comprises the first existing knowledge and the second existing knowledge, and the first existing knowledge is "dried small shrimps include calcium", and the second existing knowledge is "calcium can prevent osteoporosis". Therefore, according to the logic rule of the consistency evidence 101 (that is, first existing knowledge $\Lambda$ second existing knowledge => y), it can be derived that y is "dried small shrimps can prevent osteoporosis", so that the target candidate knowledge does not conflict with the existing correct knowledge, the conflict candidate knowledge conflicts with the existing correct knowledge, and the probability that the target candidate knowledge is correct is larger than the probability that the conflict candidate knowledge is correct.

For example, in an example, the first existing knowledge may be expressed as "containing (K, M)", the second existing knowledge may be expressed as "prevention (M, D)", and y may be expressed as "prevention (K, D)", here, K may be food, medicine, etc., M may be an element, a substance, and the like contained in K, and D may be a symptom, a disease, or the like. Therefore, the logic rule of the consistency evidence 101 can be modeled as "containing (K,M) $\Lambda$ prevention (M,D) => prevention (K,D)". For example, the first existing knowledge is "Lemon contains a large amount of Vitamin C", the second existing knowledge is "Vitamin C can prevent colds", y is "Lemon can prevent colds", then the logic rule of the consistency evidence 101 is expressed as: containing (lemon, Vitamin C) $\Lambda$ prevention (Vitamin C, cold) => prevention (lemon, cold).

For example, a weight $W_1$ of the consistency evidence 101 is a logical value of the logic rule of the consistency evidence 101. For example, in a case where the logical value is true, the weight $W_1$ is 1, and in a case where the logical value is false, the weight $W_1$ is 0. For example, the target candidate knowledge is "Lemon can prevent colds", and the conflict candidate knowledge is "Lemon cannot prevent colds". If the first existing knowledge is "Lemon contains a large amount of Vitamin C", the second existing knowledge is "Vitamin C can prevent colds". Based on the logic rule of the consistency evidence 101, a weight $W_1$ of the consistency evidence 101 of the target candidate knowledge is 1, a weight $W_1$ of the consistency evidence 101 of the conflict candidate knowledge is 0, so that the probability that target candidate knowledge is correct is greater than the probability that the conflict candidate knowledge is correct.

For example, the existing knowledge base may comprise multiple pieces of existing correct knowledge (such as, first exiting knowledge, second exiting knowledge, third exiting knowledge, fourth exiting knowledge, and the like shown in FIG. 2B), the multiple pieces of existing correct knowledge may constitute a plurality of consistency evidences 101 (such as, a consistency evidence 101a, a consistency evidence 101b, and the like shown in FIG. 2A). The plurality of consistency evidences 101 may have a plurality of weights $W_1$ (such as, a weight $W_{1a}$, a weight $W_{1b}$, and the like shown in FIG. 2A).

For example, a verification probability of the target candidate knowledge may be a compatibility probability between the target candidate knowledge and the data source and the existing knowledge base. That is, the verification probability of the target candidate knowledge is a correct probability of the target candidate knowledge. A verification probability of the conflict candidate knowledge may be a compatibility probability between the conflict candidate knowledge and the data source and the existing knowledge base. That is, the verification probability of the conflict candidate knowledge is a correct probability of the conflict candidate knowledge.

For another example, a verification probability of the target candidate knowledge also may be an incompatibility probability between the target candidate knowledge and the data source and the existing knowledge base. That is, the verification probability of the target candidate knowledge is an incorrect probability of the target candidate knowledge. A verification probability of the conflict candidate knowledge may be an incompatibility probability between the conflict candidate knowledge and the data source and the existing knowledge base. That is, the verification probability of the conflict candidate knowledge is an incorrect probability of the conflict candidate knowledge.

It should be noted that, in the embodiments of the present disclosure, the verification probability is a correct probability, which is taken as an example for detail descriptions here. However, the verification probability also may be an incorrect probability of the target/conflict candidate knowledge. The embodiments of the present disclosure are not limited thereto.

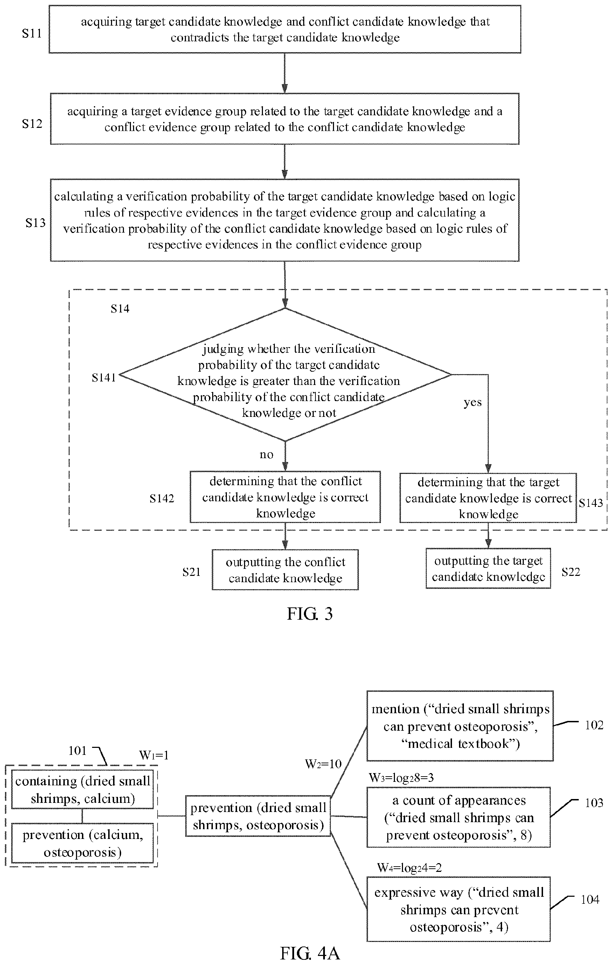

FIG. 3 shows a schematic flowchart of another knowledge verification method provided by at least one embodiment of the present disclosure.

For example, as shown in FIG. 3, in an example, in a case where the verification probability is a correct probability, the step S14 may comprise the following steps:

S141: judging whether the verification probability of the target candidate knowledge is greater than the verification probability of the conflict candidate knowledge or not;
if the verification probability of the target candidate knowledge is not greater than the verification probability of the conflict candidate knowledge, performing step S142: determining that the conflict candidate knowledge is correct knowledge;
if the verification probability of the target candidate knowledge is greater than the verification probability of the conflict candidate knowledge, performing step S143: determining that the target candidate knowledge is correct knowledge.

For example, according to logic rules of respective evidences modeled based on the Markov logic network, a verification probability of the target candidate knowledge and a verification probability of the conflict candidate knowledge each can be expressed as:

$$P(y) = \frac{1}{Z}\exp(\sum_{i=1}^{T} w_i \bullet f_i(y)) \quad (1)$$

here, Z is a normalization factor. In a case where y represents the target candidate knowledge, P(y) in the above formula (1) is the verification probability of the target candidate knowledge, $f_i(y)$ is a logical value (eigenvalue) of a logic rule of an i-th evidence in the target evidence group, $f_i(y)=1$ indicates that the logic rule of the i-th evidence in the target evidence group is true, $f_i(y)=0$ indicates that the logic rule of the i-th evidence in the target evidence group is false, $W_i$ represents a weight of the i-th evidence in the target evidence group, and T represents a quantity of evidences in the target evidence group. In a case where y represents the conflict candidate knowledge, P(y) in the above formula (1) is the verification probability of the conflict candidate knowledge, $f_i(y)$ is a logical value of a logic rule of an i-th evidence in the conflict evidence group, $f_i(y)=1$ indicates that the logic rule of the i-th evidence in the conflict evidence group is true, $f_i(y)=0$ indicates that the logic rule of the i-th evidence in the conflict evidence group is false, $W_i$ represents a weight of the i-th evidence in the conflict evidence group, and T represents a quantity of evidences in the conflict evidence group.

For example, vertexes in Markov logic network are ground predicates or ground atoms, logical relationships among the ground predicates or among ground atoms are ground formulas. Each ground predicate or each ground atom corresponds to a binary node (that is, an eigenvalue of the ground predicate or the ground atom), if a ground predicate or a ground atom is true, a value of a corresponding binary node is 1; and if the ground predicate or the ground atom is false, the value of the corresponding binary node is 0. Each ground formula corresponds to an eigenvalue, if a ground formula is true, a corresponding eigenvalue is 1; if the ground formula is false, the corresponding eigenvalue is 0.

For example, the source evidence 102, the redundancy evidence 103, and the expressive way evidence 104 all are ground predicates or ground atoms, and the consistency evidence 101 is a ground formula. For example, for the source evidence 102, the redundancy evidence 103, and the expressive way evidence 104, the logic rule of $f_i(y)$ is true, that is $f_i(y)=1$. For the consistency evidence 101, if the target candidate knowledge (or the conflict candidate knowledge) is compatible with the existing correct knowledge, then the logic rule of $f_i(y)$ is true, that is $f_i(y)=1$, otherwise $f_i(y)=0$.

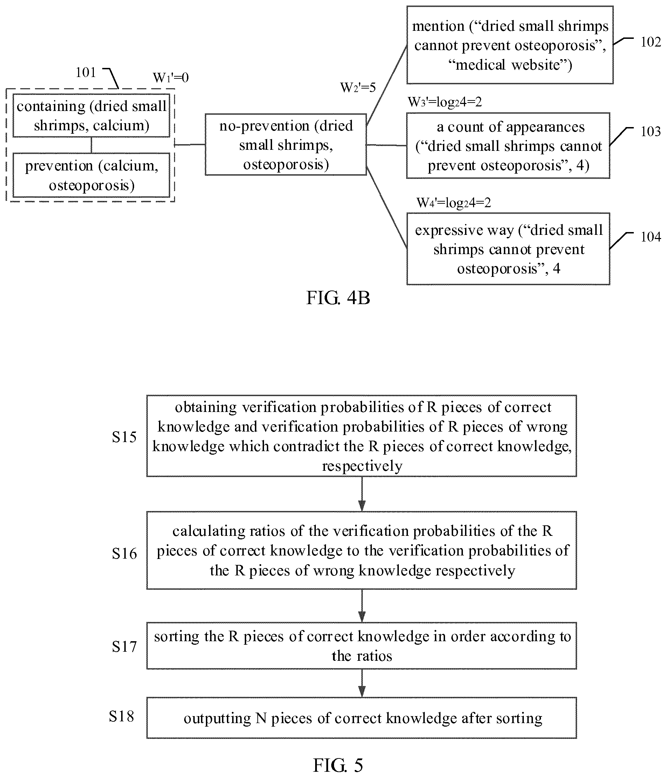

FIG. 4A shows a schematic block diagram of an example of a target evidence group provided by at least one embodiment of the present disclosure; FIG. 4B shows a schematic block diagram of an example of a conflict evidence group provided by at least one embodiment of the present disclosure.

For example, in a specific example, a target candidate knowledge is "dried small shrimps can prevent osteoporosis", and a conflict candidate knowledge is "dried small shrimps cannot prevent osteoporosis".

For example, as shown in FIG. 4A, a target evidence group comprises: mention ("dried small shrimps can prevent osteoporosis", "medical textbook"), a count of appearances ("dried small shrimps can prevent osteoporosis", 8), expressive way ("dried small shrimps can prevent osteoporosis", 4), and "containing (dried small shrimps, calcium)" $\Lambda$ "prevention (calcium, osteoporosis)" => "prevention (dried small shrimps, osteoporosis)". Therefore, a weight of the source evidence 102 of the target candidate knowledge is $W_2=10$, a weight of the redundancy evidence 103 of the target candidate knowledge is $W_3= \log_2 8=3$, and a weight of the expressive way evidence 104 of the target candidate knowledge is $W_4= \log_2 4=2$. The target candidate knowledge (that is, "dried small shrimps can prevent osteoporosis") does not conflict with the consistency evidence 101, that is, a weight of the consistency evidence 101 of the target candidate knowledge is $W_1=1$.

For example, as shown in FIG. 4B, a conflict evidence group comprises: mention ("dried small shrimps cannot prevent osteoporosis", "medical website"), a count of appearances ("dried small shrimps cannot prevent osteoporosis", 4), expressive way ("dried small shrimps cannot prevent osteoporosis", 4), and "containing (dried small shrimps, calcium)" $\Lambda$ "prevention (calcium, osteoporosis)" => "prevention (dried small shrimps, osteoporosis)". Therefore, a weight of the source evidence 102 of the conflict candidate knowledge is $W_2'=5$, a weight of the redundancy evidence 103 of the conflict candidate knowledge is $W_3'= \log_2 4=2$, and a weight of the expressive way evidence 104 of the conflict candidate knowledge is $W_4'= \log_2 4=2$. The conflict candidate knowledge (that is "dried small shrimps cannot prevent osteoporosis") conflicts with the consistency evidence 101, that is, a weight of the consistency evidence 101 of the conflict candidate knowledge is $W_1'=0$.

In summary, in step S13, based on the logic rules of respective evidences in the target evidence group, the verification probability of the target candidate knowledge can be calculated. The verification probability of the target candidate knowledge is expressed as follows:

$$P(\text{target candidate knowledge}) = \frac{1}{Z} e^{(W_1+W_2+W_3+W_4)} = \frac{1}{Z} e^{(1+10+3+2)} = \frac{1}{Z} e^{16}$$

Based on the logic rules of respective evidences in the conflict evidence group, the verification probability of the conflict candidate knowledge can be calculated. The verification probability of the conflict candidate knowledge is expressed as follows:

$$P(\text{conflict candidate knowledge}) = \frac{1}{Z} e^{(W_1'+W_2'+W_3'+W_4')} = \frac{1}{Z} e^{(0+5+2+2)} = \frac{1}{Z} e^{9}$$

For the target candidate knowledge and the conflict candidate knowledge, Z is the same.

For example, in step S14, according to a comparison result between the verification probability of the target candidate knowledge and the verification probability of the conflict candidate knowledge, it can be determined whether the target candidate knowledge is correct knowledge or not. For example, in an example shown in FIG. 4A and FIG. 4B,

$P(\text{target candidate knowledge}) > P(\text{conflict candidate knowledge})$.

Thus, it can be determined that the target candidate knowledge is correct knowledge.

For example, the knowledge verification method further comprises outputting the correct knowledge. For example, the output correct knowledge can be displayed on a monitor, or can be a voice outputted through a speaker, or the like.

For example, the knowledge verification method can output all or part of the correct knowledge. As shown in FIG. 3A, in an example, the knowledge verification method further comprises the following steps:

after the step S142 is performed, performing step S21: outputting the conflict candidate knowledge;
after the step S143 is performed, performing step S22: outputting the target candidate knowledge.

FIG. 5 shows a schematic flowchart of yet another knowledge verification method provided by at least one embodiment of the present disclosure.

For example, the knowledge verification method also may output the correct knowledge that a user desires to display, such as, displaying N pieces of correct knowledge. As shown in FIG. 5, in another example, when the step S14 is performed, the knowledge verification method may further perform the following steps:

S15: obtaining verification probabilities of R pieces of correct knowledge and verification probabilities of R pieces of wrong knowledge which contradict the R pieces of correct knowledge, respectively;
S16: calculating ratios of the verification probabilities of the R pieces of correct knowledge to the verification probabilities of the R pieces of wrong knowledge respectively;
S17: sorting the R pieces of correct knowledge in order according to the ratios;
S18: outputting N pieces of correct knowledge after sorting.

For example, in step S15, multiple pieces of correct knowledge and verification probabilities thereof, and multiple pieces of wrong knowledge and verification probabilities thereof may be determined according to a method shown in FIG. 1 and/or FIG. 3.

For example, the correct knowledge may be the target candidate knowledge, or the conflict candidate knowledge; correspondingly, the wrong knowledge may be the conflict candidate knowledge, or the target candidate knowledge.

For example, a ratio may be expressed as follows:

$P(\text{correct knowledge})/P(\text{wrong knowledge})$

here, P(correct knowledge) may be P(target candidate knowledge), or P(conflict candidate knowledge); correspondingly, P(wrong knowledge) may be P(conflict candidate knowledge), or P(target candidate knowledge).

For example, N is a positive integer, and N≤R. N may be the quantity of the correct knowledge that the user expects to display. N may be related to the quantity of candidate knowledge in the candidate knowledge group, and N, for example, may be 10% of the quantity of candidate knowledge. The embodiments of the present disclosure do not specifically limit N.

For example, the N pieces of correct knowledge may correspond to the top N ratios of the ratios. For example, the N pieces of correct knowledge may be N pieces of target candidate knowledge that correspond to the top N ratios. However the embodiments of the present disclosure are not limited thereto, the N pieces of correct knowledge may also correspond to the smallest N ratios.

For example, the R pieces of correct knowledge may be all correct knowledge, that is, R is the number of all correct knowledge; the R pieces of correct knowledge also may be a part of the correct knowledge.

For example, the knowledge verification method provided by an embodiment of the present disclosure may further comprise outputting information such as a ratio of each correct knowledge, a verification probability of the correct knowledge, and the like. It should be noted that, the knowledge verification method provided by an embodiment of the present disclosure also may comprise outputting the wrong knowledge.

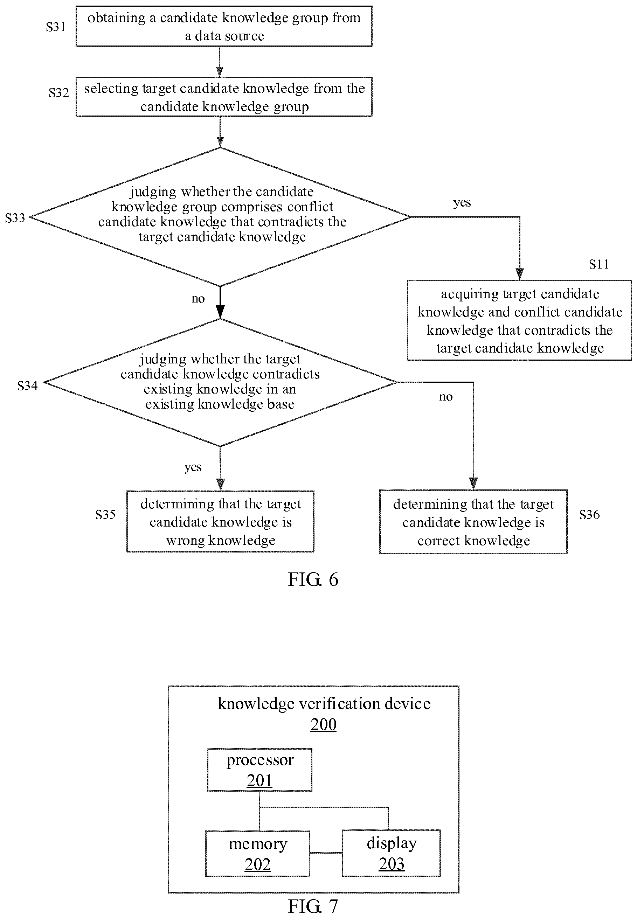

FIG. 6 shows a schematic flowchart of still yet another knowledge verification method provided by at least one embodiment of the present disclosure.

For example, as shown in FIG. 6, in an example, before the step 11 shown in FIG. 1 is performed, the knowledge verification method may further comprise the following steps:

S31: obtaining a candidate knowledge group from a data source;
S32: selecting target candidate knowledge from the candidate knowledge group;
S33: judging whether the candidate knowledge group comprises conflict candidate knowledge that contradicts the target candidate knowledge; if the candidate knowledge group comprises the conflict candidate knowledge, proceeding to the step S11; if the candidate knowledge group does not comprise the conflict candidate knowledge, performing step S34 which includes judging whether the target candidate knowledge contradicts existing knowledge in an existing knowledge base; if the target candidate knowledge contradicts the existing knowledge, performing step S35 which includes determining that the target candidate knowledge is wrong knowledge; and if the target candidate knowledge does not contradict the existing knowledge, performing step S36 which includes determining that the target candidate knowledge is correct knowledge.

For example, in a case where the candidate knowledge group includes all candidate knowledge in the data source, when it is determined that the target candidate knowledge is correct knowledge, it means that both the data source and the existing knowledge base do not comprise knowledge that contradicts the target candidate knowledge. Therefore, it can be directly determined that the target candidate knowledge is correct knowledge, and the target candidate knowledge is output as needed.

For another example, in a case where the candidate knowledge group includes a plurality pieces of candidate knowledge extracted from the data source, when it is determined that the target candidate knowledge (or conflict candidate knowledge) is correct knowledge, that is, after performing the step S142 or the step S143 shown in FIG. 3 or the step S36 shown in FIG. 6, the target candidate knowledge (or conflict candidate knowledge) may be stored in a correct knowledge group. Thus, outputting the correct knowledge may comprise the following steps: obtaining the correct knowledge from the correct knowledge group; constructing wrong knowledge that contradicts the correct knowledge; obtaining a correct evidence group related to the correct knowledge and a wrong evidence group related to the wrong knowledge; calculating verification probabilities of the correct knowledge based on logic rules of respective evidences in the correct evidence group; calculating verification probabilities of the wrong knowledge based on logic rules of respective evidences in the wrong evidence group; calculating ratios of the verification probabilities of the correct knowledge to the verification probabilities of the corresponding wrong knowledge respectively; sorting the correct knowledge in order according to the ratios; and outputting N pieces of correct knowledge after sorting.

It should be noted that, in order to reduce the amount of computation, in a case where the candidate knowledge group comprises both the target candidate knowledge and the conflict candidate knowledge that contradicts the target candidate knowledge, that is, the correct knowledge is correct knowledge verified by the method shown in FIG. 1 and/or FIG.3, the verification probabilities of the correct knowledge and the verification probabilities of the wrong knowledge can be directly obtained (for example, referring to the step 13 shown in FIG. 1 and/or FIG. 3), so that the ratios of the verification probabilities of the correct knowledge to the verification probabilities of the wrong knowledge can be directly calculated; or the ratios of the verification probabilities of the correct knowledge to the verification probabilities of the wrong knowledge may also be directly obtained (for example, referring to the step S16 shown in FIG. 5). And then the correct knowledge are sorted according to the ratios.

FIG. 7 shows a schematic block diagram of a knowledge verification device provided by at least one embodiment of the present disclosure.

For example, as shown in FIG. 7, a knowledge verification device 200 provided by an embodiment of the present disclosure may comprise a processor 201, a memory 202, and a display 203. It should be noted that the components of the knowledge verification device shown in FIG. 7 are merely exemplary and not limitative, and according to the actual application needs, the knowledge verification device may also comprise other components.

For example, the processor 201, the memory 202, the display 203, and other components may be connected and communicated with each other through a network. The processor 201, the memory 202, the display 203, and other components may be directly or indirectly communicated with each other.

For example, the network may comprise a wireless network, a wired network, and/or any combination of the wireless network and the wired network. The network may comprise a local area network, the Internet, a telecommunication network, Internet of things based on the Internet and/or the telecommunication network, and/or any combination of the above networks, and the like. For example, the wired network may adopt communication means such as a twisted pair, coaxial cable or optical fiber transmission. The wireless network may adopt communication means such as 3G/4G/5G mobile communication networks, Bluetooth, Zigbee or WiFi. The present disclosure does not limit types and functions of the network herein.

For example, the processor 201 may be a central processing unit (CPU) or other forms of processing units having data processing capabilities and/or program execution capabilities, such as a field-programmable gate array (FPGA), or a tensor processing unit (TPU), and the processor 201 may control other components in the knowledge verification device 200 to perform desired functions. For another example, the central processing unit (CPU) may be X86, ARM architecture, or the like.

For example, the memory 202 may comprise an arbitrary combination of one or more computer program products. The computer program products may comprise various forms of computer-readable storage media, such as volatile memory and/or non-volatile memory. The volatile memory may comprise, for example, a random access memory (RAM) and/or a cache, or the like. The non-volatile memory may comprise, for example, a read only memory (ROM), a hard disk, an erasable programmable read only memory (EPROM), a compact disc-read only memory (CD-ROM), a USB memory, a flash memory, and the like. One or more non-transitory computer instructions may be stored on the memory 202, and the processor 201 may execute the non-transitory computer instructions to implement various functions. Various application programs and various data, such as a data source, an existing knowledge base, weights, verification probabilities of target candidate knowledge, verification probabilities of conflict candidate knowledge, and various data used and/or generated by the application programs, and the like, may also be stored in the computer-readable storage medium.

For example, the display 203 may be a liquid crystal display (LCD), an organic light-emitting diode display (OLED), and the like.

It should be noted that, in some embodiments, according to actual needs, the knowledge verification device may further comprise an input device (such as, a touch device, a keyboard, a microphone, a mouse, etc.), a speaker, and the like. A user may use the display 203, the input device, and the like to achieve interaction with the knowledge verification device 200. For example, the user may check the correct knowledge through the display 203, and may also input candidate knowledge that needs to be verified and the like through the input device.

For example, the non-transitory computer instructions, as executed by the processor 201, causing the processor 201 to perform steps including: acquiring target candidate knowledge and conflict candidate knowledge that contradicts the target candidate knowledge; acquiring a target evidence group related to the target candidate knowledge and a conflict evidence group related to the conflict candidate knowledge; calculating a verification probability of the target candidate knowledge based on logic rules of respective evidences in the target evidence group, and calculating a verification probability of the conflict candidate knowledge based on logic rules of respective evidences in the conflict evidence group; and comparing the verification probability of the target candidate knowledge with the verification probability of the conflict candidate knowledge, and determining whether the target candidate knowledge is correct knowledge or not according to a comparison result.

For example, a natural language processing (NLP) technology can be used to extract the target candidate knowledge and the conflict candidate knowledge. The natural language processing technology can perform language processing by using a deep learning neural network (such as, a recurrent neural network, a recursive neural network, and so on) and other methods.

For example, each of the target evidence group and the conflict evidence group may comprise at least one of a group consisting of a source evidence, a redundancy evidence, and an expressive way evidence, and the source evidence, the redundancy evidence, and the expressive way evidence all may be obtained from a data source. For another example, the target evidence group and the conflict evidence group each may also respectively comprise a consistency evidence, and the consistency evidence is obtained from an existing knowledge base.

For example, a logic rule of the source evidence may be expressed as: mention (y, s); a logic rule of the redundancy evidence may be expressed as: the count of appearances (y, N); a logic rule of the expressive way evidence may be expressed as: expressive way (y, M); and a logic rule of the consistency evidence may be expressed as: first existing knowledge Λ second existing knowledge => y. In a case where y denotes the target candidate knowledge, S represents a source of the target candidate knowledge, N represents the number of appearances of the target candidate knowledge, M represents the quantity of different expressive ways of the target candidate knowledge; in a case where y represents the conflict candidate knowledge, S represents a source of the conflict candidate knowledge, N represents the number of appearances of the conflict candidate knowledge, M represents the quantity of different expressive ways of the conflict candidate knowledge.

For example, a weight of the source evidence may be represented as an authority level of S, a weight of the redundancy evidence may be represented as $\log_a N$, a weight of the expressive way evidence may be represented as $\log_a M$, $\log_a$ represents a logarithmic function with "a" as a base number, and a weight of the consistency evidence may be represented as a logical value of the logic rule of the consistency evidence.

For example, the embodiments of the present disclosure may model logic rules of evidences through Markov logic network, and calculates the verification probabilities of the target candidate knowledge (or conflict candidate knowledge) according to the logic rules of evidences. For example, according to logic rules of respective evidences modeled based on the Markov logic network, a verification probability of target candidate knowledge and a verification probability of conflict candidate knowledge each can be expressed as:

$$ P(y) = \frac{1}{Z} \exp(\sum_{i=1}^{T} w_i \bullet f_i(y)) , $$

here, Z is a normalization factor. In a case where y represents the target candidate knowledge, P(y) is the verification probability of the target candidate knowledge, $f_i(y)$ is an eigenvalue of a logic rule of an i-th evidence in the target evidence group, $f_i(y)=1$ indicates that the logic rule of the i-th evidence in the target evidence group is true, $f_i(y)=0$ indicates that the logic rule of the i-th evidence in the target evidence group is false, $W_i$ represents a weight of the i-th evidence in the target evidence group, and T represents a quantity of evidences in the target evidence group; in a case where y represents the conflict candidate knowledge, P(y) is the verification probability of the conflict candidate knowledge, $f_i(y)$ is an eigenvalue of a logic rule of an i-th evidence in the conflict evidence group, $f_i(y)=1$ indicates that the logic rule of the i-th evidence in the conflict evidence group is true, $f_i(y)=0$ indicates that the logic rule of the i-th evidence in the conflict evidence group is false, $W_i$ represents a weight of the i-th evidence in the conflict evidence group, and T represents a quantity of evidences in the conflict evidence group.

For example, in an example, in a case where the verification probability is a correct probability, the non-transitory computer instructions, as executed by the processor 201, causing the processor 201 to perform a step of "comparing the verification probability of the target candidate knowledge with the verification probability of the conflict candidate knowledge and determining whether the target candidate knowledge is correct or not according to a comparison result", which includes: judging whether the verification probability of the target candidate knowledge is greater than the verification probability of the conflict candidate knowledge; if the verification probability of the target candidate knowledge is not greater than the verification probability of the conflict candidate knowledge, determining that the conflict candidate knowledge is correct knowledge; if the verification probability of the target candidate knowledge is greater than the verification probability of the conflict candidate knowledge, determining that the target candidate knowledge is correct knowledge.

For example, in an example, the non-transitory computer instructions, as executed by the processor 201, further causing the processor 201 to perform steps including: obtaining verification probabilities of R pieces of correct knowledge and verification probabilities of R pieces of wrong knowledge which contradicts the R pieces of correct knowledge; calculating ratios of the verification probabilities of the R pieces of correct knowledge to the verification probabilities of the R pieces of wrong knowledge respectively; sorting the R pieces of correct knowledge in order according to the ratios; and outputting N pieces of correct knowledge after sorting.

For example, N is a positive integer, and N≤R. N may be the quantity of correct knowledge that the user expects to display.

For example, in an example, the non-transitory computer instructions, as executed by the processor 201, further causing the processor 201 to perform steps including: outputting the sorted N pieces of correct knowledge to the display 203; and displaying the sorted N pieces of correct knowledge on the display 203.

For example, the N pieces of correct knowledge may correspond to top N ratios of the ratios.

For example, in an example, the non-transitory computer instructions, as executed by the processor 201, further causing the processor 201 to perform steps including: obtaining a candidate knowledge group from a data source; selecting target candidate knowledge from the candidate knowledge group; judging whether the candidate knowledge group comprises conflict candidate knowledge that contradicts the target candidate knowledge; if the candidate knowledge group comprises the conflict candidate knowledge, calculating a verification probability of the target candidate knowledge and a verification probability of the conflict candidate knowledge, and determining whether the target candidate knowledge is correct knowledge or not according to a comparison result between the verification probability of the target candidate knowledge and the verification probability of the conflict candidate knowledge; if the candidate knowledge group does not comprise the conflict candidate knowledge, judging whether the target candidate knowledge contradicts existing knowledge in an existing knowledge base, if the target candidate knowledge contradicts the existing knowledge, determining that the target candidate knowledge is wrong knowledge, and if the target candidate knowledge does not contradict the existing knowledge, determining that the target candidate knowledge is correct knowledge.

For example, in an example, in a case where it is determined that the target candidate knowledge (or conflict candidate knowledge) is correct knowledge, the target candidate knowledge (or conflict candidate knowledge) may be stored in a correct knowledge group. The non-transitory computer instructions, as executed by the processor 201, further causing the processor 201 to perform steps including: obtaining the correct knowledge from the correct knowledge group; constructing wrong knowledge that contradicts the correct knowledge; obtaining a correct evidence group related to the correct knowledge and a wrong evidence group related to the wrong knowledge; calculating verification probabilities of the correct knowledge based on logic rules of respective evidences in the correct evidence group; calculating verification probabilities of the wrong knowledge based on logic rules of respective evidences in the wrong evidence group; calculating ratios of the verification probabilities of the correct knowledge to the verification probabilities of the corresponding wrong knowledge respectively; sorting the correct knowledge in order according to the ratios; and outputting sorted N pieces of correct knowledge.

It should be noted that, relevant detailed descriptions of the data source, the existing knowledge base, the source evidence, the redundancy evidence, the expressive way evidence, the consistency evidence, and the like can be referred to related descriptions in the embodiments of the knowledge verification method, and similar descriptions will be omitted here.

At least one embodiment of the present disclosure further provides a storage medium, and the storage medium is configured to store non-transitory computer instructions. The non-transitory computer instructions, as executed by a processor, cause the processor to perform steps including: acquiring target candidate knowledge and conflict candidate knowledge that contradicts the target candidate knowledge; acquiring a target evidence group related to the target candidate knowledge and a conflict evidence group related to the conflict candidate knowledge; calculating a verification probability of the target candidate knowledge based on logic rules of respective evidences in the target evidence group, and calculating a verification probability of the conflict candidate knowledge based on logic rules of respective evidences in the conflict evidence group; and comparing the verification probability of the target candidate knowledge with the verification probability of the conflict candidate knowledge, and determining whether the target candidate knowledge is correct knowledge or not according to a comparison result.

For example, in an example of the embodiments of the present disclosure, the storage medium may be applied in the knowledge verification device described in any one of the above embodiments. For example, the storage medium may be the memory 202 of the knowledge verification device.

For example, the description of the storage medium may be referred to the descriptions of the memory 202 in the embodiments of the knowledge verification device, and similar descriptions will be omitted here.

For the present disclosure, the following statements should be noted:

(1) the accompanying drawings involve only the structure(s) in connection with the embodiment(s) of the present disclosure, and other structure(s) can be referred to in common design(s); and
(2) in a case with no conflict, the embodiments of the present disclosure and the features in the embodiment(s) can be combined with each other to obtain new embodiment(s).

What have been described above are only specific implementations of the present disclosure, the protection scope of the present disclosure is not limited thereto, and the protection scope of the present disclosure should be based on the protection scope of the claims.

**Claims**

1. A knowledge verification method, comprising:

acquiring target candidate knowledge and conflict candidate knowledge that contradicts the target candidate knowledge;
acquiring a target evidence group related to the target candidate knowledge and a conflict evidence group related to the conflict candidate knowledge;

calculating a verification probability of the target candidate knowledge based on logic rules of respective evidences in the target evidence group, and calculating a verification probability of the conflict candidate knowledge based on logic rules of respective evidences in the conflict evidence group; and

comparing the verification probability of the target candidate knowledge with the verification probability of the conflict candidate knowledge and determining whether the target candidate knowledge is correct knowledge or not according to a comparison result.

2. The knowledge verification method according to claim 1, wherein the target evidence group and the conflict evidence group each comprises at least one of a group consisting of a source evidence, a redundancy evidence, and an expressive way evidence, and

the source evidence, the redundancy evidence, and the expressive way evidence are obtained from a data source.

3. The knowledge verification method according to claim 2, wherein the target evidence group and the conflict evidence group each further comprises a consistency evidence, and

the consistency evidence is obtained from an existing knowledge base.

4. The knowledge verification method according to claim 3, wherein
a logic rule of the source evidence is expressed as: mention (y, s);
a logic rule of the redundancy evidence is expressed as: a count of appearances (y, N);
a logic rule of the expressive way evidence is expressed as: expressive way (y, M); and
a logic rule of the consistency evidence is expressed as: first existing knowledge $\Lambda$ second existing knowledge => y, wherein in a case where y denotes the target candidate knowledge, S denotes a source of the target candidate knowledge, N denotes a count of appearances of the target candidate knowledge, and M denotes a quantity of different expressive ways of the target candidate knowledge;

in a case where y denotes the conflict candidate knowledge, S denotes a source of the conflict candidate knowledge, N denotes a count of appearances of the conflict candidate knowledge, and M denotes a quantity of different expressive ways of the conflict candidate knowledge;

a weight of the source evidence is represented as an authority level of S, a weight of the redundancy evidence is represented as $\log_a N$, a weight of the expressive way evidence is represented as $\log_a M$, $\log_a$ denotes a logarithmic function with a base number of a, and a weight of the consistency evidence is represented as a logical value of the logic rule of the consistency evidence.

5. The knowledge verification method according to claim 4, wherein the verification probability of the target candidate knowledge and the verification probability of the conflict candidate knowledge each is expressed as:

$$P(y) = \frac{1}{Z}\exp(\sum_{i=1}^{T} w_i \bullet f_i(y))$$

wherein Z is a normalization factor,
in a case where y denotes the target candidate knowledge, $f_i(y)$ is an eigenvalue of a logic rule of an i-th evidence in the target evidence group, $f_i(y)=1$ indicates that the logic rule of the i-th evidence in the target evidence group is true, $f_i(y)=0$ indicates that the logic rule of the i-th evidence in the target evidence group is false, $W_i$ represents a weight of the i-th evidence in the target evidence group, and T represents a quantity of evidences in the target evidence group;

in a case where y denotes the conflict candidate knowledge, $f_i(y)$ is an eigenvalue of a logic rule of an i-th evidence in the conflict evidence group, $f_i(y)=1$ indicates that the logic rule of the i-th evidence in the conflict evidence group is true, $f_i(y)=0$ indicates that the logic rule of the i-th evidence in the conflict evidence group is false, $W_i$ represents a weight of the i-th evidence in the conflict evidence group, and T represents a quantity of evidences in the conflict evidence group.

6. The knowledge verification method according to any of claims 1 to 5, wherein the verification probability is a correct probability,

comparing the verification probability of the target candidate knowledge with the verification probability of the conflict candidate knowledge and determining whether the target candidate knowledge is correct knowledge or not according to a comparison result comprises:

judging whether the verification probability of the target candidate knowledge is greater than the verification probability of the conflict candidate knowledge,

in a case of not being greater, determining that the conflict candidate knowledge is correct knowledge and the target candidate knowledge is wrong knowledge, and outputting the conflict candidate knowledge; and

in a case of being greater, determining that the target candidate knowledge is correct knowledge and the conflict candidate knowledge is wrong knowledge, and outputting the target candidate knowledge.

7. The knowledge verification method according to any of claims 1 to 6, further comprising:

obtaining verification probabilities of R pieces of correct knowledge and verification probabilities of R pieces of wrong knowledge which contradict the R pieces of correct knowledge, respectively;

calculating ratios of the verification probabilities of the R pieces of correct knowledge to the verification probabilities of the R pieces of wrong knowledge respectively;

sorting the R pieces of correct knowledge in order according to the ratios; and

outputting N pieces of correct knowledge after sorting, wherein N is a positive integer, and N≤R.

8. The knowledge verification method according to claim 7, wherein the N pieces of correct knowledge corresponds to top N ratios of the ratios.

9. A knowledge verification device, comprising a processor and a memory, the memory being configured for storing non-transitory computer instructions, wherein the non-transitory computer instructions, as executed by the processor, causing the processor to perform steps comprising:

acquiring target candidate knowledge and conflict candidate knowledge that contradicts the target candidate knowledge;

acquiring a target evidence group related to the target candidate knowledge and a conflict evidence group related to the conflict candidate knowledge;

calculating a verification probability of the target candidate knowledge based on logic rules of respective evidences in the target evidence group, and calculating a verification probability of the conflict candidate knowledge based on logic rules of respective evidences in the conflict evidence group; and

comparing the verification probability of the target candidate knowledge with the verification probability of the conflict candidate knowledge and determining whether the target candidate knowledge is correct knowledge or not according to a comparison result.

10. The knowledge verification device according to claim 9, wherein the target evidence group and the conflict evidence group each comprises at least one of a group consisting of a source evidence, a redundancy evidence and an expressive way evidence, and the source evidence, the redundancy evidence, and the expressive way evidence are obtained from a data source.

11. The knowledge verification device according to claim 10, wherein the target evidence group and the conflict evidence group each further comprises a consistency evidence, and the consistency evidence is obtained from an existing knowledge base.

12. The knowledge verification device according to claim 11, wherein:

a logic rule of the source evidence is expressed as: mention (y, s);

a logic rule of the redundancy evidence is expressed as: a count of appearances (y, N);

a logic rule of the expressive way evidence is expressed as: expressive way (y, M); and

a logic rule of the consistency evidence is expressed as: first existing knowledge $\Lambda$ second existing knowledge => y,

wherein in a case where y denotes the target candidate knowledge, S denotes a source of the target candidate knowledge, N denotes a count of appearances of the target candidate knowledge, and M denotes a quantity of different expressive ways of the target candidate knowledge;

in a case where y denotes the conflict candidate knowledge, S denotes a source of the conflict candidate knowledge, N denotes a count of appearances of the conflict candidate knowledge, and M denotes a quantity of different expressive ways of the conflict candidate knowledge;

a weight of the source evidence is represented as an authority level of S, a weight of the redundancy evidence is represented as $\log_a N$, a weight of the expressive way evidence is represented as $\log_a M$, $\log_a$ denotes a logarithmic function with a base number of a, and a weight of the consistency evidence is represented as a logical value of the logic rule of the consistency evidence.

**13.** The knowledge verification device according to claim 12, wherein the verification probability of the target candidate knowledge and the verification probability of the conflict candidate knowledge each is expressed as:

$$P(y) = \frac{1}{Z} \exp(\sum_{i=1}^{T} w_i \bullet f_i(y))$$

wherein Z is a normalization factor,
in a case where y denotes the target candidate knowledge, $f_i(y)$ is an eigenvalue of a logic rule of an i-th evidence in the target evidence group, $f_i(y)=1$ indicates that the logic rule of the i-th evidence in the target evidence group is true, $f_i(y)=0$ indicates that the logic rule of the i-th evidence in the target evidence group is false, $W_i$ represents a weight of the i-th evidence in the target evidence group, and T represents a quantity of evidences in the target evidence group;
in a case where y denotes the conflict candidate knowledge, $f_i(y)$ is an eigenvalue of a logic rule of an i-th evidence in the conflict evidence group, $f_i(y)=1$ indicates that the logic rule of the i-th evidence in the conflict evidence group is true, $f_i(y)=0$ indicates that the logic rule of the i-th evidence in the conflict evidence group is false, $W_i$ represents a weight of the i-th evidence in the conflict evidence group, and T represents a quantity of evidences in the conflict evidence group.

**14.** The knowledge verification device according to any of claims 9 to 13, wherein the non-transitory computer instructions, as executed by the processor, further causing the processor to perform steps comprising:

   obtaining verification probabilities of R pieces of correct knowledge and verification probabilities of R pieces of wrong knowledge which contradict the R pieces of correct knowledge;
   calculating ratios of the verification probabilities of the R pieces of correct knowledge to the verification probabilities of the R pieces of wrong knowledge respectively;
   sorting the R pieces of correct knowledge in order according to the ratios; and
   outputting N pieces of correct knowledge after sorting, wherein N is a positive integer, and N≤R.

**15.** The knowledge verification device according to claim 14, further comprising a display,
wherein the non-transitory computer instructions, as executed by the processor, further causing the processor to perform steps comprising:

   outputting the N pieces of correct knowledge after sorting to the display; and
   displaying the N pieces of correct knowledge after sorting on the display.

**16.** The knowledge verification device according to claim 14 or 15, wherein the N pieces of correct knowledge corresponds to top N ratios of the ratios.

**17.** The knowledge verification device according to any of claims 9 to 16, wherein the verification probability is a correct probability,
the non-transitory computer instructions, as executed by the processor, causing the processor to perform a step of comparing the verification probability of the target candidate knowledge with the verification probability of the conflict candidate knowledge and determining whether the target candidate knowledge is correct knowledge or not according to the comparison result, which comprises:
judging whether the verification probability of the target candidate knowledge is greater than the verification probability of the conflict candidate knowledge,

   in a case of being not greater, determining that the conflict candidate knowledge is correct knowledge and the target candidate knowledge is wrong knowledge, and outputting the conflict candidate knowledge; and
   in a case of being greater, determining that the target candidate knowledge is correct knowledge and the conflict candidate knowledge is wrong knowledge, and outputting the target candidate knowledge.

**18.** A storage medium, used for storing non-transitory computer instructions, wherein the non-transitory computer instructions, as executed by a processor, cause the processor to perform steps including:

   acquiring target candidate knowledge and conflict candidate knowledge that contradicts the target candidate knowledge;

acquiring a target evidence group related to the target candidate knowledge and a conflict evidence group related to the conflict candidate knowledge;

calculating a verification probability of the target candidate knowledge based on logic rules of respective evidences in the target evidence group, and calculating a verification probability of the conflict candidate knowledge based on logic rules of respective evidences in the conflict evidence group; and

comparing the verification probability of the target candidate knowledge with the verification probability of the conflict candidate knowledge, and determining whether the target candidate knowledge is correct knowledge or not according to a comparison result.

19. The storage medium according to claim 18, wherein the non-transitory computer instructions, as executed by the processor, further causing the processor to perform steps comprising:

obtaining verification probabilities of R pieces of correct knowledge and verification probabilities of R pieces of wrong knowledge which contradict the R pieces of correct knowledge;

calculating ratios of the verification probabilities of the R pieces of correct knowledge to the verification probabilities of the R pieces of wrong knowledge respectively;

sorting the R pieces of correct knowledge in order according to the ratios; and

outputting N pieces of correct knowledge after sorting, wherein N is a positive integer, and N≤R.

20. The storage medium according to claim 19, wherein the non-transitory computer instructions, as executed by the processor, further causing the processor to perform a step comprising:

displaying the N pieces of correct knowledge after sorting.

S11 | acquiring target candidate knowledge and conflict candidate knowledge that contradicts the target candidate knowledge

S12 | acquiring a target evidence group related to the target candidate knowledge and a conflict evidence group related to the conflict candidate knowledge

S13 | calculating a verification probability of the target candidate knowledge based on logic rules of respective evidences in the target evidence group and calculating a verification probability of the conflict candidate knowledge based on logic rules of respective evidences in the conflict evidence group

S14 | comparing the verification probability of the target candidate knowledge with the verification probability of the conflict candidate knowledge and determining whether the target candidate knowledge is correct knowledge or not according to a comparison result

FIG. 1

101

consistency evidence 101a | $W_{1a}$

consistency evidence 101b | $W_{1b}$

target candidate knowledge/conflict candidate knowledge

$W_2$ | source evidence 102

$W_3$ | redundancy evidence 103

$W_4$ | expressive way evidence 104

$W_T$ | evidence T

FIG. 2A

101a

101

first exiting
knowledge

second exiting
knowledge

$W_{1a}$

third exiting
knowledge

fourth exiting
knowledge

$W_{1b}$

⋮

101b

target candidate
knowledge/conflict
candidate knowledge

$W_2$

$W_3$

$W_4$

$W_T$

mentioning (y, s)     102

a count of
appearances (y, N)     103

expressive way (y,
M)     104

⋮

evidence T

FIG. 2B

| S11 | acquiring target candidate knowledge and conflict candidate knowledge that contradicts the target candidate knowledge |

| S12 | acquiring a target evidence group related to the target candidate knowledge and a conflict evidence group related to the conflict candidate knowledge |

| S13 | calculating a verification probability of the target candidate knowledge based on logic rules of respective evidences in the target evidence group and calculating a verification probability of the conflict candidate knowledge based on logic rules of respective evidences in the conflict evidence group |

S14

S141 — judging whether the verification probability of the target candidate knowledge is greater than the verification probability of the conflict candidate knowledge or not

no

S142 — determining that the conflict candidate knowledge is correct knowledge

yes

S143 — determining that the target candidate knowledge is correct knowledge

S21 — outputting the conflict candidate knowledge

S22 — outputting the target candidate knowledge

FIG. 3

101 — $W_1=1$

containing (dried small shrimps, calcium)

prevention (calcium, osteoporosis)

$W_2=10$

prevention (dried small shrimps, osteoporosis)

mention ("dried small shrimps can prevent osteoporosis", "medical textbook") — 102

$W_3=\log_2 8=3$

a count of appearances ("dried small shrimps can prevent osteoporosis", 8) — 103

$W_4=\log_2 4=2$

expressive way ("dried small shrimps can prevent osteoporosis", 4) — 104

FIG. 4A

$W_1'=0$

$W_2'=5$

101

containing (dried small shrimps, calcium)

prevention (calcium, osteoporosis)

no-prevention (dried small shrimps, osteoporosis)

mention ("dried small shrimps cannot prevent osteoporosis", "medical website") 102

$W_3'=\log_2 4=2$

a count of appearances ("dried small shrimps cannot prevent osteoporosis", 4) 103

$W_4'=\log_2 4=2$

expressive way ("dried small shrimps cannot prevent osteoporosis", 4 104

FIG. 4B

S15 | obtaining verification probabilities of R pieces of correct knowledge and verification probabilities of R pieces of wrong knowledge which contradict the R pieces of correct knowledge, respectively

S16 | calculating ratios of the verification probabilities of the R pieces of correct knowledge to the verification probabilities of the R pieces of wrong knowledge respectively

S17 | sorting the R pieces of correct knowledge in order according to the ratios

S18 | outputting N pieces of correct knowledge after sorting

FIG. 5

S31 — obtaining a candidate knowledge group from a data source

S32 — selecting target candidate knowledge from the candidate knowledge group

S33 — judging whether the candidate knowledge group comprises conflict candidate knowledge that contradicts the target candidate knowledge

yes

S11 — acquiring target candidate knowledge and conflict candidate knowledge that contradicts the target candidate knowledge

no

S34 — judging whether the target candidate knowledge contradicts existing knowledge in an existing knowledge base

no

yes

S35 — determining that the target candidate knowledge is wrong knowledge

S36 — determining that the target candidate knowledge is correct knowledge

FIG. 6

knowledge verification device
200

processor
201

memory
202

display
203

FIG. 7

## INTERNATIONAL SEARCH REPORT

| | International application No. |
| --- | --- |
| | **PCT/CN2018/096652** |

**A.    CLASSIFICATION OF SUBJECT MATTER**

G06F 17/30(2006.01)i

According to International Patent Classification (IPC) or to both national classification and IPC

**B.    FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT; CNKI; WPI; EPODOC: 知识, 验证, 候选, 规则, 概率, 逻辑, 证据, 矛盾, 冲突, knowledge, verify, candidate, rule, probability, logic, evidence, collision

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 107391682 A (BOE TECHNOLOGY GROUP CO., LTD.) 24 November 2017 (2017-11-24)<br>  claims 1-15, and description, paragraphs [0024]-[0118] | 1-20 |
| A | CN 103500208 A (DOCTORAL DISSERTATION OF INSTITUTE OF AUTOMATION, CHINESE ACADEMY OF SCIENCES) 08 January 2014 (2014-01-08)<br>  description, paragraphs [0006]-[0024] | 1-20 |
| A | CN 106294323 A (SHANGHAI JIAO TONG UNIVERSITY) 04 January 2017 (2017-01-04)<br>  entire document | 1-20 |
| A | US 2009024615 A1 (SIEMENS MEDICAL SOLUTIONS USA, INC.) 22 January 2009 (2009-01-22)<br>  entire document | 1-20 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **10 October 2018** | **25 October 2018** |

| Name and mailing address of the ISA/CN | Authorized officer |
| --- | --- |
| **State Intellectual Property Office of the P. R. China**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT
**Information on patent family members**

International application No.

**PCT/CN2018/096652**

| Patent document cited in search report | | | Publication date (day/month/year) | Patent family member(s) | Publication date (day/month/year) |
|---|---|---|---|---|---|
| CN | 107391682 | A | 24 November 2017 | None | |
| CN | 103500208 | A | 08 January 2014 | None | |
| CN | 106294323 | A | 04 January 2017 | None | |
| US | 2009024615 | A1 | 22 January 2009 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201710606293